# EUROPÄISCHE PATENTSCHRIFT

(11) **EP 4 451 842 B1**
(45) Veröffentlichungstag und Bekanntmachung des Hinweises auf die Patenterteilung: **10.09.2025**
(21) Anmeldenummer: 22840125.3
(22) Anmeldetag: 19.12.2022
(51) Int. Cl.: A01G 2/38, A01G 7/04

(54) **PFLANZKLAMMER**
GRAFTING CLIP
PINCE POUR PLANTES

(30) Priorität: 21.12.2021 DE 102021133978
(43) Veröffentlichungstag der Anmeldung: 30.10.2024
(73) Patentinhaber: Silnova GmbH, 95111 Rehau (DE)
(72) Erfinder: DAMKE, Marco, 95173 Schönwald (DE)
(86) Internationale Anmeldenummer: PCT/EP2022/086647
(87) Internationale Veröffentlichungsnummer: WO 2023/117898

(56) Entgegenhaltungen:
- WO-A1-2021/131356
- CN-U- 214 155 452

## Beschreibung

Die Erfindung betrifft eine Pflanzklammer zur Pfropfung von zwei unterschiedlichen Pflanzen mit
- einer mindestens eine Ausnehmung aufweisenden Klemmeinrichtung, die dafür vorgesehen ist, die endseitigen Stengel der beiden zusammenzufügenden Pflanzen in der Ausnehmung aufzunehmen und dort miteinander, vorzugsweise stirnseitig, in Kontakt zu bringen, wobei durch die Klemmwirkung der Klemmeinrichtung dieser Kontakt dauerhaft sicherstellbar ist und
- mindestens einem Federelement zur Erzeugung der Klemmwirkung der Klemmeinrichtung.

Eine solche Pflanzklammer ist aus der WO 2021/131356 A1 bekannt. Im erwerbsmäßigen Obst- und Gemüseanbau werden Gemüsejungpflanzen durch die Veredelung von Edelfruchtsorten auf einer wuchskräftigen und krankheitsresistenten Unterlage (= Pflanze mit Wurzelwerk) herangezogen. Bei dieser Art der Veredelung werden die sog. Kopfstecklinge (= Trieb mit Frucht) von besonders ertragsreichen Fruchtsorten, auf robuste Stämme gleicher oder anderer Sorten (= Unterlage) aufgepfropft. Dadurch entsteht im gärtnerischen Sprachgebrauch eine Jungpflanze, die weiterverarbeitet, getopft oder gepflanzt werden kann.

Das Heranziehen von Jungpflanzen erfolgt heute in der Regel durch spezialisierte Gärtnereien/Jungpflanzen-(veredelungs)betriebe im Gewächshaus. Mittels der oben beschriebenen Vorgehensweise der Jungpflanzenheranzucht, hat der Gärtner durch die zielgerichtete Kombination der Unterlage mit unterschiedlichsten, ertragsreichen Fruchtsorten die Möglichkeit, die Sorte und Ertrag zu optimieren.

Viele Fruchtgemüse-Jungpflanzen wie z.B. Tomaten, Paprika, Auberginen, Gurken u.v.m werden auf diese Weise in Gewächshäusern durch die beschriebene "Kopfveredelung" herangezüchtet.

Sogenannte Pflanzklammern dienen bei der eingangs beschriebenen Kopfveredelung von Fruchtgemüse als verbindendes Element zwischen Unterlage und Fruchtsorte und sorgen gleichzeitig für die erforderliche Stabilität der Verbindung. Pflanzklammern sind das übliche Hilfsmittel für diese Art der Veredelung und können bei allen Fruchtgemüsearten, die eine Veredelung erfordern, angewandt werden. Pflanzklammern haben sich in diesem Zusammenhang bewährt, besitzen bislang aber ausschließlich die Funktion, eine stabile, dauerhafte Verbindung zwischen den beiden zu pfropfenden Pflanzen sicherzustellen. Eine darüber hinausgehende Förderung des Zusammenwachsens der beiden Pflanzen erfolgt durch die im Stand der Technik bekannten Pflanzklammern nicht.

Vor diesem Hintergrund liegt der Erfindung der Aufgabe zugrunde, eine Pflanzklammer mit den eingangs beschriebenen Merkmalen anzugeben, die zusätzlich zu ihrer verbindenden und stabilisierenden Funktion das Zusammenwachsen der beiden durch die Pflanzklammer miteinander verbundenen Pflanzen fördert.

Diese Aufgabe wird durch eine Klemmeinrichtung gemäß Anspruch 1 gelöst. Erfindungsgemäß ist die Klemmeinrichtung zur Förderung des Zusammenwachsens der gepfropften Pflanzen zumindest bereichsweise mit einem magnetisierbaren Material versehen.

Der Erfolg der Veredelung ist neben der richtigen Pflanzklammer von verschiedenen Faktoren wie Temperaturverhältnisse, Luftfeuchtigkeit, Klimabedingungen, Pflanzmethodik (Bsp. Gewächshaus, Freiland), Lichteinfall, keimfreie Schnittwerkzeuge und der Pflanzenart abhängig. Ferner ist grundsätzlich bekannt, dass magnetische Strahlung (im niedrigen milli-Tesla-Bereich) positive Einflüsse auf die Keimung von Pflanzensamen (wie z.B. Bohnen), sowie die allgemeine Wasser- und Nährstoffaufnahme und das gesamte Pflanzenwachstum hat. Erfindungsgemäß wurde nun erkannt, dass die Pflanzklammer zusätzlich zur Erzeugung magnetischer Strahlung zwecks Verbesserung des Pfropfungsergebnisses genutzt werden. Die Erfindung basiert auf der Überlegung, dass man Keimung und Pfropfung als ähnlich betrachten kann, da es sich bei beim Beschnitt von Unterlage und Fruchttrieb jeweils um eine "Beschädigung" handelt, welche wieder geschlossen wird. Um dies zu erreichen, ist eine erhöhte Zellteilung und damit verbunden ein erhöhter Wasser- und Nährstoffbedarf vorhanden. Die gleiche Notwendigkeit liegt auch bei der Keimung vor.

Erfindungsgemäß wurde erkannt, dass, soweit das magnetisierbare Material der Klemmeinrichtung in magnetisiertem Zustand vorliegt, mittels der von der Pflanzklammer erzeugten magnetischen Strahlung eine bessere Wasser- und Nährstoffaufnahme erfolgen kann, vor allem im "kritischen" Verbindungsbereich. Hieraus resultiert auch eine reduzierte Zeitspanne, in der sich schädliche Pilze, Bakterien oder Ähnliches an der Übergangstelle vermehren können. Insgesamt ist mittels der erfindungsgemäßen Lehre ein schnelleres Wachstum und somit früheres Fruchtwachstum bzw. eine frühere Ernte und damit ein höherer Ertrag möglich.

Vorzugsweise basiert die Klemmeinrichtung auf einem polymeren, insbesondere elastomeren Material. Im Rahmen der Erfindung liegt hierbei insbesondere, dass die Klemmeinrichtung auf Silikonmaterial basiert. Silikon besitzt eine hervorragende dauerhafte Elastizität und ist auch gegenüber der Bildung von Pilzen, Bakterien etc. sehr resistent. Ein weiterer grundsätzlicher Vorteil von Silikon ist die bei diesem Material gewährleistbare Durchsichtigkeit, so dass in der Regel der Fortschritt der Pfropfung gut beobachtet werden kann.

Das magnetisierbare Material ist vorzugsweise als anorganisch-oxidisches Magnetmaterial, z.B. als Ferrit, ausgebildet, beispielsweise Magnetit (Eisen(II,III)-oxid) und/oder Strontiumhexaferrit und/oder Bariumhexaferrit und/oder Erdalkali-Ferrit und/oder als seltenes Erdenmaterial. Ganz allgemein kann das magnetisierbaren Material aus metallischen Legierungen aus Eisen und/oder Nickel und/oder Kobalt, ggf. mit Zusätzen von Aluminium und/oder Mangan und/oder Silizium und/oder Kupfer hergestellt sein. Im Rahmen der Erfindung liegt hier auch der Einsatz von Samarium-Kobalt und/oder Neodym-Eisen-Bor. Das magnetisierbare Material kann auch aus einer Kombination von zwei oder mehr der vorgenannten Werkstoffe hergestellt sein. Das magnetisierbare Material kann als Pulver ausgebildet sein, z.B. mit einer mittleren Korngröße von maximal 1 mm, insbesondere maximal 0,5 mm. Zweckmäßigerweise ist das magnetisierbare Material partikelförmig in der Materialmatrix der Klemmeinrichtung verteilt. Im Rahmen der Erfindung liegt es grundsätzlich aber auch, dass das magnetisierbare Material als Materialblock (insbesondere in magnetisierter Form als "Magnet") an der Klemmeinrichtung angeordnet wird, beispielsweise mittels Klebstoff.

Das Federelement kann einstückig an die Klemmeinrichtung angeformt sein. Hierbei schließt das Federelement vorzugsweise als Ringsegment an die Klemmeinrichtung an. Die Ausnehmung kann durch eine ringförmige Gestaltung der Klemmeinrichtung gebildet und die Weite der Ausnehmung durch eine geschlitzte Ringform der Klemmeinrichtung variierbar sein. Hierdurch ist es insbesondere möglich, die Ausnehmung bei der Aufnahme der beiden miteinander zu pfropfenden Pflanzen elastisch aufzuweiten, um den Vorgang der Pfropfung innerhalb der Pflanzklammer zu erleichtern. Diese Aufweitung kann zweckmäßigerweise durch (bspw. manuelle) Betätigung, insbesondere ein Zusammendrücken, des Federelementes erfolgen.

Im Rahmen der Erfindung liegt es insbesondere, dass die Klemmeinrichtung als Extrusionsprofil ausgebildet ist. Dies erlaubt eine sehr kostengünstige Fertigung. Das magnetisierbare Material kann hierbei in vorteilhafter Weise dem zu extrudierenden Polymermaterial bspw. partikelförmig zugegeben werden und verteilt sich durch die Extrusion dann in der Materialmatrix der extrudierten Pflanzklammer. Zweckmäßigerweise wird das erhaltene Extrudat abgelängt, um geeignete Größen der Pflanzklammer bereitzustellen, beispielsweise in Längen von 5 bis 50 mm, z.B. 10 bis 20 mm. Diese Ablängung kann insbesondere auch beim Kunden erfolgen, d.h. der Kunde erhält eine entsprechende Bundware / Endlosware und längt diese nach seinen eigenen Bedürfnissen ab. Die Magnetisierung des magnetisierbaren Materials kann online mit der Extrusion erfolgen. Im Rahmen der Erfindung liegt es selbstverständlich aber auch, die Magnetisierung erst nach Abschluss des Herstellungs-, insbesondere Extrusionsverfahrens durchzuführen, vorzugsweise nachdem die, insbesondere im Wege der Extrusion hergestellte, Klemmeinrichtung einen Abkühlvorgang durchlaufen hat, beispielsweise bis auf Raumtemperatur. Grundsätzlich im Rahmen der Erfindung liegt es weiterhin auch, dass die Klemmeinrichtung als Formteil, insbesondere als Spritzguss-Formteil ausgebildet ist.

Gegenstand der Erfindung ist auch die Verwendung einer vorbeschriebenen Pflanzklammer zur Pfropfung von mindestens zwei unterschiedlichen Pflanzen. Insbesondere kann mit der Pflanzklammer mittels der vorbeschriebenen Vorgehensweise ein Arbeitsverfahren zur Pfropfung von mindestens zwei unterschiedlichen Pflanzen durchgeführt werden.

Im Folgenden wird die Erfindung anhand einer lediglich ein Ausführungsbeispiel darstellenden Zeichnung ausführlich erläutert. Es zeigen schematisch:
- Fig. 1a:: eine erfindungsgemäße Pflanzklammer in einer Querschnittsdarstellung in unbelastetem, geschlossenen Zustand,
- Fig. 1b:: die in Fig. 1a gezeigte Pflanzklammer im geöffneten Zustand,
- Fig. 1c:: die Ansicht A der in Fig. 1a gezeigte Pflanzklammer mit darin aufgenommenen Pflanzstengeln und
- Fig. 2:: eine alternative Ausführungsform der Erfindung in einer der Fig. 1a entsprechenden Darstellung.

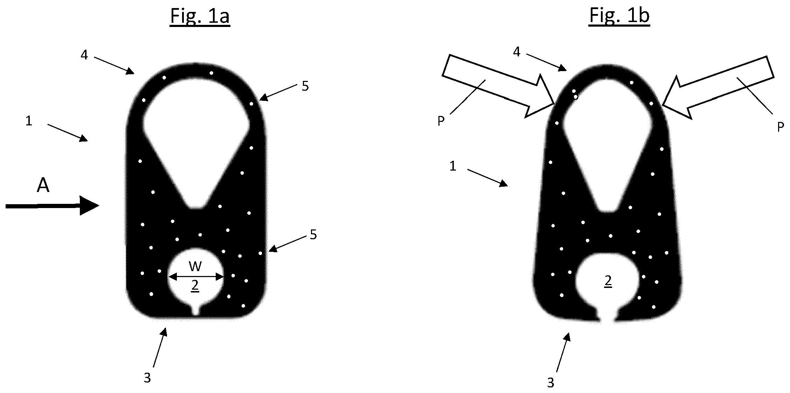

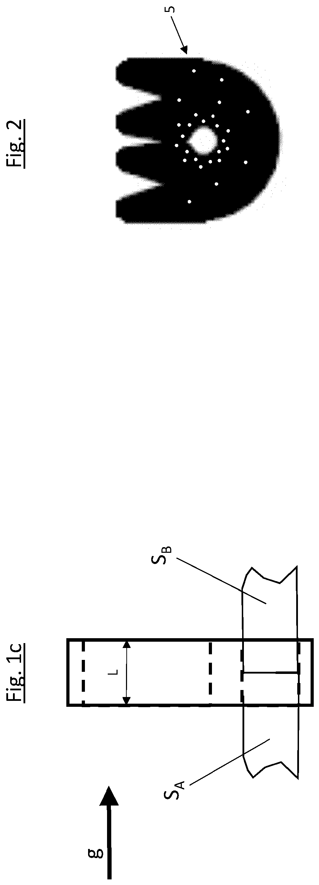

Fig. 1a - c zeigen eine Pflanzklammer 1 zur Pfropfung von zwei unterschiedlichen Pflanzen mit einer eine Ausnehmung 2 aufweisenden Klemmeinrichtung 3. Die Klemmeinrichtung 3 ist dafür vorgesehen, die endseitigen Stengel S_{A}, S_{B} der beiden zusammenzufügenden Pflanzen in der Ausnehmung 2 aufzunehmen und dort miteinander stirnseitig in Kontakt zu bringen, wobei durch die Klemmwirkung der Klemmeinrichtung 3 dieser Kontakt dauerhaft sichergestellt werden kann. In diesem Zusammenhang wird auf Fig. 1c verwiesen, welche die Pflanzklammer mit darin aufgenommenen Pflanzstengeln S_{A}, S_{B} zeigt. Es ist erkennbar, dass durch die Klemmwirkung der Pflanzklammer 1 die beiden vertikal ausgerichteten Pflanzstengel S_{A}, S_{B} (s. Richtung der Gravitationskraft g in Fig. 1c) stirnseitig dauerhaft miteinander in Kontakt gebracht werden und hierdurch zusammenwachsen können. Die Pflanzklammer 1 und damit auch die Klemmeinrichtung 3 ist aus einem polymeren Material in Form eines Elastomers hergestellt. Im Ausführungsbeispiel basiert die Pflanzklammer 1 auf Silikonmaterial und ist im Wege eines Extrusionsverfahrens hergestellt.

Die Pflanzklammer 1 weist ferner ein Federelement 4 zur Erzeugung der Klemmwirkung der Klemmeinrichtung 3 auf. Die Funktionsweise des Federelementes 4 wird in Fig. 1b erläutert. Durch ein beispielsweise manuelles Zusammendrücken des Federelementes 4 (gekennzeichnet durch mit Pfeilen P dargestellte Kräfte) wird die Ausnehmung 2 elastisch aufgeweitet, so dass die beiden Pflanzstengel S_{A}, S_{B} problemlos darin aufgenommen und miteinander stirnseitig in Kontakt gebracht werden können. Wird das Federelement 4 wieder entlastet, so verkleinert sich die Öffnungsweite W der Ausnehmung 2 wieder und hierdurch entsteht eine Klemmwirkung der Klemmeinrichtung 3, welche einen dauerhaften Kontakt der beiden Pflanzstengel S_{A}, S_{B} sicherstellt und für das Zusammenwachsen der beiden Pflanzen wesentlich ist. Das Federelement 4 ist einstückig an die Klemmeinrichtung 3 angeformt und schließt als Ringsegment an die Klemmeinrichtung 3 an. Die Ausnehmung 2 wird durch eine ringförmige Gestaltung der Klemmeinrichtung 3 gebildet und die Weite W der Ausnehmung 2 ist aufgrund einer Ausbildung der Klemmeinrichtung 3 als geschlitzter Ring variierbar (s. Fig. 1b). Hierdurch ist es insbesondere möglich, die Ausnehmung 2 bei der Aufnahme der beiden miteinander zu pfropfenden Pflanzen elastisch aufzuweiten, um den Vorgang der Pfropfung innerhalb der Pflanzklammer 1 zu erleichtern.

Wie den Figuren 1a und 1b zu entnehmen ist, ist die Klemmeinrichtung 3 zur Förderung des Zusammenwachsens der gepfropften Pflanzen mit einem magnetisierbaren Material 5 versehen, welches in den Ausführungsbeispielen partikelförmig ausgebildet und in der Materialmatrix der Klemmeinrichtung 5 homogen über den Querschnitt der Pflanzklammern 1 verteilt ist. Im Rahmen der Erfindung liegt es grundsätzlich auch, dass die Konzentration des magnetisierbaren Materials 5 in der Klemmeinrichtung 3, und dort insbesondere in der Nähe der Ausnehmung 2, höher ist als im restlichen Querschnitt der Pflanzklammer 1 ist (s. Fig. 2). Dadurch befindet sich das magnetisierbare Material 5 insbesondere in der Nähe der Pfropfungsstelle der beiden Pflanzstengel S_{A}, S_{B}, so dass der magnetische Effekt zur Förderung des Pflanzenwachstums besonders gut ausgenutzt werden kann. Um dies zu erreichen, kann ggf. eine 2K-Extrusion von Vorteil sein, bei der die Materialkomponente zur Herstellung der Klemmeinrichtung 3 das magnetisierbare Material 5 enthält und die andere Komponente (die bspw. zur Herstellung des Federelementes verwendet wird) frei von magnetisierbarem Material 5 ist. Das magnetisierbare Material 5 ist im Ausführungsbeispiel als anorganisch-oxidisches Magnetmaterial, z.B. als Magnetit ausgebildet. Das magnetisierbare partikelförmige Material 5 ist als Pulver mit einer mittleren Korngröße von maximal 1 mm ausgebildet, wodurch größere Partikelgrößen jedoch nicht ausgeschlossen sind. Während das Ausführungsbeispiel gemäß Fig. 1a - c insbesondere für die manuelle Pfropfung von Pflanzen geeignet ist, erfolgt die Nutzung der Pflanzklammer 1 gemäß Fig. 2 vorzugsweise bei einer automatischen Bestückung durch Roboter (nicht dargestellt).

Bei der Herstellung der Pflanzklammern 1 wird das magnetisierbare Material 5 dem zu extrudierenden Polymermaterial partikelförmig zugegeben werden und verteilt sich durch die Extrusion dann in der Materialmatrix der extrudierten Pflanzklammer 1. Nach der Extrusion wird das erhaltene Extrudat dann abgelängt, um geeignete Größen der Pflanzklammern 1 bereitzustellen, beispielsweise in Längen L von 5 bis 50 mm, z.B. 10 bis 20 mm (s. Fig. 1c). Im Ausführungsbeispiel erfolgt die Magnetisierung des magnetisierbaren Materials 5 erst nach Abschluss des Extrusionsverfahrens auch erst dann, wenn das Extrudat auf Raumtemperatur abgekühlt ist. Danach wird das Extrudat wie beschrieben in die einzelnen Pflanzklammern 1 abgelängt.

Die Pflanzklammern 1 fallen nach einiger Zeit von der aus der Pfropfung hervorgegangenen Jungpflanze ab, sobald sich aufgrund deren Wachstum der Jungpflanzen-Stengel soweit verdickt, dass er die Aufnehmung der Klemmeinrichtung 3 entsprechend stark aufweitet und die Klemmwirkung nicht mehr ausreicht, um die Pflanzklammer 1 an der Jungpflanze festzuhalten.

## Patentansprüche

1. Pflanzklammer (1) zur Pfropfung von zwei unterschiedlichen Pflanzen mit
- einer mindestens eine Ausnehmung (2) aufweisenden Klemmeinrichtung (3), die dafür vorgesehen ist, die endseitigen Stengel (SA, SB) der beiden zusammenzufügenden Pflanzen in der Ausnehmung (2) aufzunehmen und dort miteinander, vorzugsweise stirnseitig, in Kontakt zu bringen, wobei durch die Klemmwirkung der Klemmeinrichtung (3) dieser Kontakt dauerhaft sicherstellbar ist und
- mindestens einem Federelement (4) zur Erzeugung der Klemmwirkung der Klemmeinrichtung (3),
**dadurch gekennzeichnet, dass** die Klemmeinrichtung (3) zur Förderung des Zusammenwachsens der gepfropften Pflanzen zumindest bereichsweise mit einem magnetisierbaren Material (5) versehen ist.

2. Pflanzklammer (1) nach Anspruch 1, **dadurch gekennzeichnet, dass** die Klemmeinrichtung (3) auf einem polymeren, insbesondere elastomeren Material basiert.

3. Pflanzklammer (1) nach Anspruch 2, **dadurch gekennzeichnet, dass** die Klemmeinrichtung (3) auf Silikonmaterial basiert.

4. Pflanzklammer (1) nach einem der Ansprüche 1 bis 3, **dadurch gekennzeichnet, dass** das magnetisierbare Material (5) als anorganisch-oxidisches Magnetmaterial ausgebildet ist.

5. Pflanzklammer (1) nach einem der Ansprüche 1 bis 4, **dadurch gekennzeichnet, dass** das magnetisierbare Material (5) partikelförmig in der Materialmatrix der Klemmeinrichtung (3) verteilt ist.

6. Pflanzklammer (1) nach einem der Ansprüche 1 bis 5, **dadurch gekennzeichnet, dass** das Federelement (5) einstückig an die Klemmeinrichtung (3) angeformt ist.

7. Pflanzklammer (1) nach Anspruch 6, **dadurch gekennzeichnet, dass** das Federelement (5) als Ringsegment an die Klemmeinrichtung (3) anschließt.

8. Pflanzklammer (1) nach einem der Ansprüche 1 bis 7, **dadurch gekennzeichnet, dass** die Ausnehmung (2) durch eine ringförmige Gestaltung der Klemmeinrichtung (3) gebildet und die Weite (W) der Ausnehmung (2) durch eine geschlitzte Ringform der Klemmeinrichtung (3) variierbar ist.

9. Pflanzklammer (1) nach einem der Ansprüche 1 bis 8, **dadurch gekennzeichnet, dass** die Klemmeinrichtung (3) als Extrusionsprofil ausgebildet ist.

10. Verwendung einer Pflanzklammer (1) nach einem der Ansprüche 1 bis 9 zur Pfropfung von mindestens zwei unterschiedlichen Pflanzen.

## Claims

1. Grafting clip (1) for grafting two different plants, having
- a clamping device (3) with at least one cavity (2), intended to receive in the cavity (2) the terminal stems (SA, SB) of the two plants to be combined and to contact them there with each other, preferably at their end faces, wherein the clamping effect of the clamping device (3) can permanently ensure this contact, and
- at least one spring element (4) for producing the clamping effect of the clamping device (3),
**characterised in that**
the clamping device (3), in order to promote the intergrowth of the grafted plants, is at least in regions provided with a magnetizable material (5).

2. Grafting clip (1) according to claim 1, **characterised in that** the clamping device (3) is based on a polymer, in particular elastomer material.

3. Grafting clip (1) according to claim 2, **characterised in that** the clamping device (3) is based on silicone material.

4. Grafting clip (1) according to any one of claims 1 to 3, **characterised in that** the magnetisable material (5) is configured as inorganic-oxidic magnet material.

5. Grafting clip (1) according to any one of claims 1 to 4, **characterised in that** the magnetisable material (5) is distributed in particle form in the material matrix of the clamping device (3).

6. Grafting clip (1) according to any one of claims 1 to 5, **characterised in that** the spring element (5) is integrally moulded in one piece on the clamping device (3).

7. Grafting clip (1) according to claim 6, **characterised in that** the spring element (5) adjoins the clamping device (3) as a ring segment.

8. Grafting clip (1) according to any one of claims 1 to 7, **characterised in that** the cavity (2) is formed by an annular shaping of the clamping device (3) and the width (W) of the cavity (2) is variable by a slotted ring shape of the clamping device (3).

9. Grafting clip (1) according to any one of claims 1 to 8, **characterised in that** the clamping device (3) is configured as an extrusion profile.

10. Use of a grafting clip (1) according to any one of claims 1 to 9 for grafting at least two different plants.

## Revendications

1. Pince à plantes (1) pour le greffage de deux plantes différentes, avec
- un appareil de serrage (3) présentant au moins un évidement (2), qui est prévu pour recevoir les tiges d'extrémité (SA, SB) des deux plantes à assembler dans l'évidement (2) et les y amener en contact l'une avec l'autre, de préférence frontalement, ce contact pouvant être assuré durablement par l'effet de serrage de l'appareil de serrage (3), et
- au moins un élément à ressort (4) pour produire l'effet de serrage de l'appareil de serrage (3),
**caractérisée en ce que**
l'appareil de serrage (3) est pourvu, au moins par zones, d'un matériau magnétisable (5) pour favoriser la croissance conjointe des plantes greffées.

2. Pince à plantes (1) selon la revendication 1, **caractérisée en ce que** l'appareil de serrage (3) est à base d'un matériau polymère, notamment élastomère.

3. Pince à plantes (1) selon la revendication 2, **caractérisée en ce que** l'appareil de serrage (3) est à base de matériau silicone.

4. Pince à plantes (1) selon l'une quelconque des revendications 1 à 3, **caractérisée en ce que** le matériau magnétisable (5) est réalisé sous forme de matériau magnétique à base d'oxyde inorganique.

5. Pince à plantes (1) selon l'une quelconque des revendications 1 à 4, **caractérisée en ce que** le matériau magnétisable (5) est réparti sous forme de particules dans la matrice de matériau de l'appareil de serrage (3).

6. Pince à plantes (1) selon l'une quelconque des revendications 1 à 5, **caractérisée en ce que** l'élément à ressort (5) est formé d'un seul tenant sur l'appareil de serrage (3).

7. Pince à plantes (1) selon la revendication 6, **caractérisée en ce que** l'élément à ressort (5) se raccorde à l'appareil de serrage (3) sous forme de segment annulaire.

8. Pince à plantes (1) selon l'une quelconque des revendications 1 à 7, **caractérisée en ce que** l'évidement (2) est formé par une configuration annulaire de l'appareil de serrage (3) et la largeur (W) de l'évidement (2) peut être modifiée par une forme annulaire fendue de l'appareil de serrage (3).

9. Pince à plantes (1) selon l'une quelconque des revendications 1 à 8, **caractérisée en ce que** l'appareil de serrage (3) est réalisé sous forme de profilé extrudé.

10. Utilisation d'une pince à plantes (1) selon l'une quelconque des revendications 1 à 9 pour le greffage d'au moins deux plantes différentes.
